(19) **Europäisches Patentamt**

**European Patent Office**

**Office européen des brevets**

(11) **EP 1 600 971 A1**

(12) **EUROPEAN PATENT APPLICATION**

(43) Date of publication:
**30.11.2005 Bulletin 2005/48**

(51) Int Cl.⁷: **G11B 27/10**

(21) Application number: **05103910.5**

(22) Date of filing: **11.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **28.05.2004 EP 04012689**<br>**28.06.2004 EP 04291622**<br><br>(71) Applicant: **Thomson Licensing**<br>**92100 Boulogne Billancourt (FR)** | (72) Inventors:<br>• **Tan, Beng Eng**<br>**600240 Singapore (SG)**<br>• **Tan, Su Mei**<br>**649925 Singapore (SG)**<br>• **Ong, Wei Khar**<br>**120709 Singapore (SG)**<br><br>(74) Representative: **Rossmanith, Manfred**<br>**Deutsche Thomson-Brandt GmbH**<br>**European Patent Operations**<br>**Karl-Wiechert-Allee 74**<br>**30625 Hannover (DE)** |

(54) **Method for non-repeating random number generation**

(57) The subject is a method for non-repeating random number generation, and an apparatus for reading from and or writing to recording media using such a method. The method for random number generation for the selection of an item from a list of items includes the steps of:

- randomising (1) a number $X$, where $X$ is in the range from '1' to the number '$M$' of not yet selected items from the list of items;
- traversing (5) the list of items to find the $X$-positioned unselected item; and
- outputting (6) the $X$-positioned unselected item.

a)

b)

| track # | ran# |
|---|---|
| track 1 | 1 |
| *track 2* | |
| track 3 | 2 |
| *track 4* | |
| ⋮ | |
| track N-3 | M-2 |
| track N-2 | M-1 |
| *track N-1* | |
| track N | M |

Fig. 2

EP 1 600 971 A1

## Description

The present invention relates to a method for non-repeating random number generation, and to an apparatus for reading from and or writing to recording media using such a method.

For random playback of audio tracks stored on an optical recording medium such as a CD (Compact Disk) a random number generator is used. In general a user does not want to listen to the tracks in a true random order, which could lead to the repetition of some of the tracks. Instead, all tracks should be played back only once in a random order. Therefore, a non-repeating random number generator is generally used.

A simple non-repeating random number generator is implemented as follows. In a first step a number $X$ is randomised, where $X$ is in the range between start track and end track. In a second step it is checked if the number $X$ has previously been generated. If this is not the case, the number $X$ is used for playback. Otherwise a new number $X$ is randomised until a number $X$ is obtained which has not previously been generated.

The above generator has a couple of drawbacks. Though it works well for small data sets, typically less than 100 items, the performance degrades significantly when the size of the data set grows. This is due to the fact that the more items have been played back, the more numbers need to be randomised to obtain a number that has not previously been generated. In addition, the performance of this generator is truly casual and unpredictable.

These two major drawbacks make this type of simple conventional non-repeating random number generator usually unacceptable for use when a huge number of items have to be randomised, which greatly hampers its application when resource requirement like processing time is a major concern. This is the case, for example, for devices capable of playback of compressed audio files (MP3 files, etc.) or compressed still pictures (JPEG files, etc). Due to the compression a large number of files may be stored on a storage medium, e.g. several thousand still pictures on a single Compact Disk or storage card, or even more files on a hard disk.

It is an object of the invention to propose a novel method for non-repeating random number generation, which is capable of handling huge numbers of items with a significant time requirement improvement.

According to the invention, this object is achieved by a method for random number generation for the selection of an item from a list of items, including the steps of:

- randomising a number $X$, where $X$ is in the range from '1' to the number '$M$' of not yet selected items from the list of items;
- traversing the list of items to find the $X$-positioned unselected item; and
- outputting the $X$-positioned unselected item.
  As can be seen, this method does not require to randomise and search for an unselected item repetitively, hence the performance is predictable. Though this method is much faster than the method known from the prior art, the performance still degrades when the list of items gets very large. This degradation mainly stems from the traversing of the list for each pass to find the unselected item.

According to a further refinement of the invention, the step of traversing the list of items to find the $X$-positioned unselected item is optimised for speed by the steps of:

- dividing the list of items into a plurality of segments;
- defining segment counters $C_n$, where the value of $C_n$ indicates the number of unselected items in segment n;
- determining (5) a target segment $S$ and a target item $Y$ in this segment using the random number $X$ and segment counters $C_n$; and
- traversing the target segment $S$ to find the $Y$-positioned unselected item.

This is an effective and efficient method for generating non-repeating random numbers. The key to this speed optimised method is the segmentation of the list and the association of a counter to each segment. In this way the search for an unselected item is started at a location which is closer to the target, thereby reducing the search time. In addition, the performance of this method does not degrade even if the size of the list grows significantly.

According to another aspect of the invention, the above object is also achieved by a method for random number generation for the selection of an item from a list of items, including the steps of:

- dividing the list of items into a plurality of segments;
- defining segment counters $C_n$, where the value of $C_n$ indicates the number of unselected items in segment $n$;
- determining a target segment S by randomising a first number $Z$, where $Z$ is in the range from '1' to the number '$Q$' of segments including at least one unselected track;
- determining a target item $Y$ in the determined segment by generating a second random number $Y$ in the range from '1' to the counter value '$C_n$' of the determined segment; and
- traversing the target segment $S$ to find the $Y$-positioned unselected item.
  Again, also in this approach only a single segment of the list has to be traversed and the time for finding the $X$-positioned unselected item is reduced compared to a traversal of the complete list up to the $X$-positioned unselected item.

Favourably, the methods according to the invention further include the steps of:

- generating a sublist of items from the list of items based on at least one selection criterion associated with the items; and
- performing the random number generation only for the sublist of items.

This has the advantage that a user may specify that only a specific type of item is selected. For example, a user may wish to select only items which were added or stored after (or before) a specific date, which were edited within a certain period of time etc. Which items correspond to the selection criteria can be determined using metadata associated with the items. In case the items are multimedia files, a selection criterion can also be the type of file, such as audio files, image files, video files or text files. In addition, the selection criterion can also be the affiliation of the multimedia files to a specific folder or selection of folders. In this case only files that are stored in a specific folder are selected. This can include files in subfolders as well, depending on the implementation. Similarly the affiliation of the multimedia files to a user-defined program list can be used for generating the sublist, which would enable random playback within a defined user selection.

Favourably, a method according to the invention is used for generating a non-repeating sequence of numbers for random playback of multimedia files, e.g. MP3 files or JPEG files, in an apparatus for reading from and or writing to recording media. The multimedia files can be stored, for example, on removable storage media such as storage cards or optical disks, or in an internal memory of the apparatus, such as a RAM or a hard disk drive. It is likewise possible to extend the invention to an apparatus without a memory, which requests the selected multimedia files from a server after determination of the files through the random number generation. In all such devices the time necessary to determine the next random multimedia file needs to be negligible. Otherwise the user of such a device might be unsatisfied.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:

Fig. 1 shows a method for non-repeating random number generation according to the prior art;

Fig. 2 depicts a method for non-repeating random number generation according to the invention;

Fig. 3 shows a speed optimised method for non-repeating random number generation according to the invention;

Fig. 4 depicts an alternative speed optimised method for non-repeating random number generation according to the invention; and

Fig. 5 illustrates the generation of a sublist of selectable items.

Though in the following the invention is explained using the example of tracks on a recording medium, use of the invention is of course not limited to this example. The invention is applicable to any scenario where an item has to be randomly selected without repetitions from a list of items.

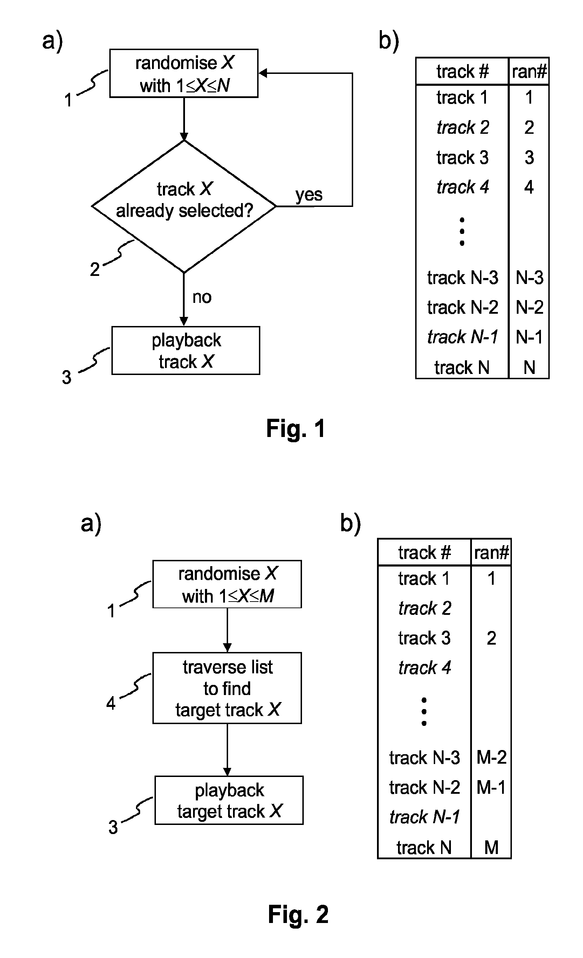

In Fig. 1a) a method for non-repeating random number generation according to the prior art is depicted. In a first step 1 a number $X$ is randomised. The number $X$ is in the range between the start track number '1' and the end track number '$N$'. In the next step 2 it is checked if the number $X$ has previously been generated, i.e. if the track with the number $X$ has already been selected. If this is not the case, track number $X$ is played back 3. Otherwise a new number $X$ is randomised 1 until a number $X$ is obtained which has not previously been generated.

Fig. 1b) depicts a table of tracks for this method of non-repeating random number generation. In the first column the available tracks from track 1 to track N are listed. Tracks that have already been selected are shown in italic. The second column indicates the random number, which has to be generated for the selection of a specific track. As can be seen from the table, some of the possible random numbers are associated to tracks that have already been played back. In case such a random number occurs, a new random number has to be generated. The probability of generating a random number that has not yet been used decreases with the decreasing number of remaining tracks.

A method for non-repeating random number generation according to the invention is illustrated in Fig. 2a). As before, in the first step 1 a number $X$ is randomised. However, in this case $X$ is in the range from '1' to the number '$M$' of not yet selected tracks from the list of tracks. When the random number $X$ has been generated, the list of tracks is traversed 4 to find the target track $X$, i.e. the $X$-positioned unselected track. This track is then played back.

As can be seen in Fig. 2b), every randomised number $X$ is associated to an unselected track. Therefore, it is no longer necessary to generate additional random numbers. Instead, each time a track has been generated the target range '1' to '$M$' of the random numbers is reduced by '1'.

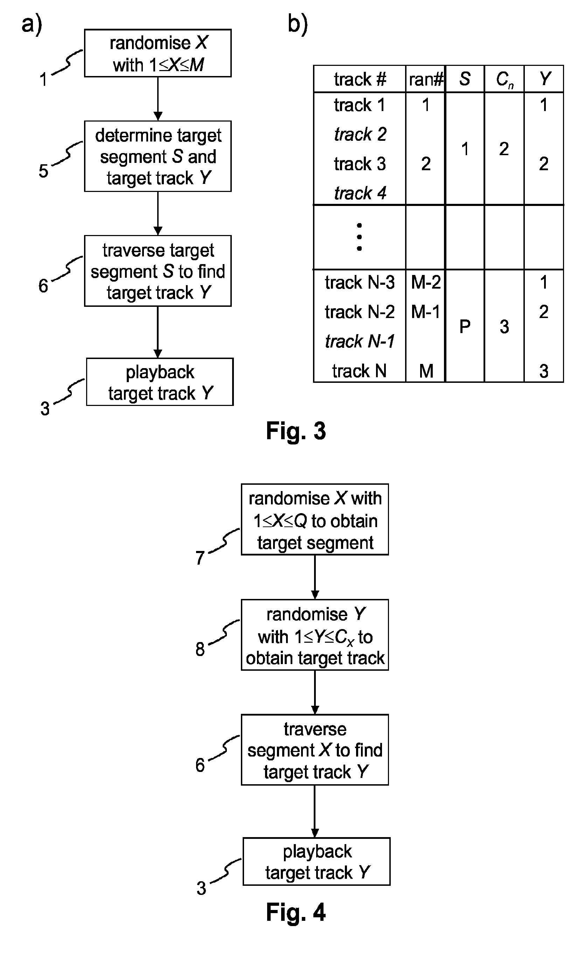

A further improvement of the invention, which leads to a speed optimisation of the method, is shown in Fig. 3a). The improvement consists of a segmentation of the list of tracks into small segments '1' to 'P', as indicated in the third column 'S' in the table in Fig. 3b). In this example each segment includes four tracks. Of course, other numbers of tracks are likewise possible. It is not even necessary to use the same number of tracks for all segments. As shown in the fourth column of the table, each segment has an associated segment counter $C_n$, whose value indicates the number of unselected items in the nth segment.

Again, in the first step 1 a number $X$ is randomised, which is in the range from '1' to the number '$M$' of not yet selected tracks from the list of tracks. Based on the random number $X$ a target segment $S$ and a target track $Y$ in this segment (indicated in the fifth column of the table) are determined 5. This can be done, for example, by calculating

$$\sum_{n=1}^{m} C_n$$

and determining the counter value $m$ for which the sum exceeds $X$. The target segment is then segment $m$. The target item $Y$ in the segment $S$ in this case is

$$Y = X - \sum_{n=1}^{m-1} C_n$$

In the following step 6 the target segment $S$ is traversed to find the $Y$-positioned unselected item, which is then played back 3. As instead of the complete list of tracks in step 6 only a segment of the list has to be traversed, the time for finding the $X$-positioned unselected track is reduced.

As shown in Fig. 4, instead of randomising a number $X$ in the range from '1' to the number '$M$' of not yet selected tracks and to subsequently determine the corresponding target segment $S$ and the target track $Y$, it is likewise possible to generate a first random number $Z$ in the range from '1' to the number '$Q$' of segments including at least one unselected track, i.e. having a counter value $C_n>0$, and then to obtain the target track number $Y$ by generating a second random number in the range from '1' to the counter value '$C_n$' of the selected segment. Again only a single segment has to be traversed for finding the selected track.

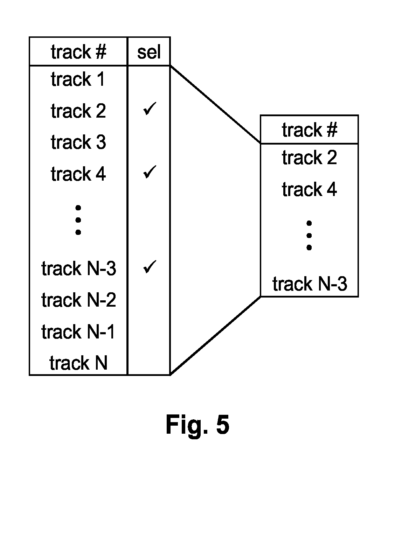

Fig. 5 illustrates the generation of a sublist of tracks. In the table of tracks on the left side of Fig. 5 the second column indicates if for a track a specific selection criterion sel is met. Tracks which meet the selection criterion are then referenced in a selection table, which is depicted on the right side of Fig. 5 and is the basis for the non-repeating random number generation. Selection criteria might be, for example, 'track has been stored by user1', or 'track has not been played back for at least one month' or the like. Especially in the case that the tracks are data files, stored e.g. on a hard disk or a memory card, a plurality of such metadata items usable as selection criteria are available. In addition, in case the tracks are arranged in a folder structure, a selection criterion could also be 'tracks in folder XYZ', i.e. only tracks that are stored in a specific folder are selected. This can include tracks in subfolders as well, depending on the implementation. Similarly, a user-defined playback program can serve as a sublist.

**Claims**

1. Method for random number generation for the selection of an item from a list of items, **including** the steps of:

   - randomising (1) a number $X$, where $X$ is in the range from '1' to the number '$M$' of not yet selected items from the list of items;
   - traversing (4) the list of items to find the $X$-positioned unselected item; and
   - outputting (3) the $X$-positioned unselected item.

2. Method according to claim 1, **wherein** the step of traversing the list of items to find the $X$-positioned unselected item includes:

   - dividing the list of items into a plurality of segments;
   - defining segment counters $C_n$, where the value of $C_n$ indicates the number of unselected items in segment $n$;
   - determining (5) a target segment $S$ and a target item $Y$ in this segment using the random number $X$ and segment counters $C_n$; and
   - traversing (6) the target segment $S$ to find the $Y$-positioned unselected item.

3. Method for random number generation for the selection of an item from a list of items, **including** the steps of:

   - dividing the list of items into a plurality of segments;
   - defining segment counters $C_n$, where the value of $C_n$ indicates the number of unselected items in segment $n$;
   - determining (7) a target segment $S$ by randomising a first number $Z$, where $Z$ is in the range from '1' to the number '$Q$' of segments including at least one unselected track;
   - determining (8) a target item $Y$ in the determined segment by generating a second random number $Y$ in the range from '1' to the counter value '$C_n$' of the determined segment; and
   - traversing (6) the target segment $S$ to find the *Y*-positioned unselected item.

4. Method according to one of claims 1 to 3, **further** including the steps of:

   - generating a sublist of items from the list of items based on at least one selection criterion associated with the items; and
   - performing the random number generation only for the sublist of items.

5. Method according to claim 4, **wherein** metadata are used as selection criteria.

6. Method according to one of claims 1 to 5, **wherein** the items are multimedia files.

7. Method according to claim 4, **wherein** the selection criterion is the affiliation of the multimedia files to a specific folder or selection of folders or a user-defined program list.

8. Apparatus for playback of multimedia files, **characterized in that** it performs a method according to one of claims 1 to 7 for generating a non-repeating sequence of numbers for random playback of multimedia files.

**Fig. 1**

**Fig. 2**

a)

randomise $X$
with $1 \leq X \leq M$

1

determine target
segment $S$ and
target track $Y$

5

traverse target
segment $S$ to find
target track $Y$

6

playback
target track $Y$

3

b)

| track # | ran# | $S$ | $C_n$ | $Y$ |
|---------|------|-----|-------|-----|
| track 1 | 1 | | | 1 |
| track 2 | | 1 | 2 | |
| track 3 | 2 | | | 2 |
| track 4 | | | | |
| ⋮ | | | | |
| track N-3 | M-2 | | | 1 |
| track N-2 | M-1 | P | 3 | 2 |
| track N-1 | | | | |
| track N | M | | | 3 |

**Fig. 3**

randomise $X$ with
$1 \leq X \leq Q$ to obtain
target segment

7

randomise $Y$
with $1 \leq Y \leq C_X$ to
obtain target track

8

traverse
segment $X$ to find
target track $Y$

6

playback
target track $Y$

3

**Fig. 4**

7

| track # | sel |
|---------|-----|
| track 1 | |
| track 2 | ✓ |
| track 3 | |
| track 4 | ✓ |
| ⋮ | |
| track N-3 | ✓ |
| track N-2 | |
| track N-1 | |
| track N | |

| track # |
|---------|
| track 2 |
| track 4 |
| ⋮ |
| track N-3 |

**Fig. 5**

**European Patent Office**

## EUROPEAN SEARCH REPORT

Application Number

EP 05 10 3910

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 408 448 A (CARMAN DAN D) 18 April 1995 (1995-04-18) * column 2, lines 16-25 * ----- | 1,3,6,8 | G11B27/10 |
| A | US 6 229 952 B1 (FUKUSHIMA YOSHIHISA ET AL) 8 May 2001 (2001-05-08) * column 15, line 38 - column 17, line 67 * ----- | 1,3,6,8 | |
| A | US 6 707 768 B2 (SCHILLING JR WALTER W ET AL) 16 March 2004 (2004-03-16) * the whole document * ----- | 2,3 | |

| TECHNICAL FIELDS SEARCHED (Int.Cl.7) |
|---|
| G11B G06F |

The present search report has been drawn up for all claims

| Place of search | Date of completion of the search | Examiner |
|---|---|---|
| The Hague | 4 August 2005 | Mourik, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 10 3910

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2005

| Patent document cited in search report | | Publication date | Patent family member(s) | | Publication date |
|---|---|---|---|---|---|
| US 5408448 | A | 18-04-1995 | NONE | | |
| US 6229952 | B1 | 08-05-2001 | US | 2002061186 A1 | 23-05-2002 |
| | | | US | 6201928 B1 | 13-03-2001 |
| | | | US | 6356703 B1 | 12-03-2002 |
| | | | CN | 1438635 A | 27-08-2003 |
| | | | CN | 1164925 A ,C | 12-11-1997 |
| | | | DE | 69601571 D1 | 01-04-1999 |
| | | | DE | 69601571 T2 | 01-07-1999 |
| | | | EP | 0788104 A1 | 06-08-1997 |
| | | | JP | 3372025 B2 | 27-01-2003 |
| | | | JP | 11007753 A | 12-01-1999 |
| | | | WO | 9707509 A1 | 27-02-1997 |
| | | | JP | 2804630 B2 | 30-09-1998 |
| | | | JP | 3372036 B2 | 27-01-2003 |
| | | | JP | 2002185927 A | 28-06-2002 |
| | | | JP | 3372037 B2 | 27-01-2003 |
| | | | JP | 2002238031 A | 23-08-2002 |
| | | | JP | 3372038 B2 | 27-01-2003 |
| | | | JP | 2002171491 A | 14-06-2002 |
| | | | US | 5734788 A | 31-03-1998 |
| US 6707768 | B2 | 21-08-2003 | US | 2003156503 A1 | 21-08-2003 |
| | | | DE | 10307642 A1 | 18-09-2003 |
| | | | GB | 2385705 A ,B | 27-08-2003 |

EPO FORM P0459